# FASCICULE DE BREVET EUROPEEN

(11) **EP 0 461 991 B1**
(45) Date de publication et mention de la délivrance du brevet: **20.11.1996**
(21) Numéro de dépôt: 91401537.5
(22) Date de dépôt: 11.06.1991
(51) Int. Cl.: G02B 6/12

(54) **Filtre optique spatial monomode intégré et son procédé de fabrication**
Integriertes optisches Monomode-Raumfilter und Verfahren zu seiner Herstellung
Spatial optical integrated monomode filter and method of manufacture

(30) Priorité: 13.06.1990 FR 9007349
(43) Date de publication de la demande: 18.12.1991
(73) Titulaire: COMMISSARIAT A L'ENERGIE ATOMIQUE, 75015 Paris (FR)
(72) Inventeur: Gidon, Pierre, F-38130 Echirolles (FR); Jadot, Jean-Pierre, F-38240 Meylan (FR); Renard, Stéphane, F-38560 Champ sur Drac (FR); Valette, Serge, F-38100 Grenoble (FR)
(74) Mandataire: Poulin, Gérard

(56) Documents cités:
- EP-A- 0 330 457
- GB-A- 2 209 844
- PATENT ABSTRACTS OF JAPAN vol. 2, no. 10 (E-77)(10460) 25 Janvier 1978& JP-A-52 127 253 (NIPPON DENKI K.K. ) 25 Octobre 1977

## Description

L'invention a pour objet un filtre optique spatial monomode pour l'optique intégrée ainsi que son procédé de fabrication. Elle trouve une application notamment dans le domaine du traitement des signaux radars en temps réel, par exemple dans des corrélateurs, des analyseurs de spectres ou des dispositifs interférométriques, dans le domaine des télécommunications par voie optique et dans le domaine des capteurs à fibres optiques.

En optique classique, un filtre spatial permet d'obtenir un faisceau lumineux débarrassé des imperfections liées aux phénomènes de diffraction (anneaux d'interférence).

En optique intégrée, le problème est généralement différent. En effet, il s'agit d'isoler, dans une structure guide d'onde, un mode et un seul et de faire en sorte qu'il soit le seul à pouvoir se propager dans la couche guide de la structure.

On rappelle qu'une structure guide d'onde consiste généralement en une couche tampon, une couche guide et une couche supérieure empilées sur un substrat, la couche guide ayant un indice de réfraction réel supérieur à celui des couches tampon et supérieure. La couche supérieure peut, dans certains cas, être remplacée par de l'air.

En toute rigueur, on pourrait s'attendre à ce que l'isolation d'un mode, en optique intégrée, soit un problème simple. Il est en effet connu qu'un microguide de lumière peut facilement être calculé et réalisé pour ne posséder qu'un seul mode guidé. Mais cette remarque pêche sur deux points.

Premièrement, un mode guidé est en théorie un mode de pertes nulles si les milieux de propagation ne sont pas absorbants.

En pratique, et dans le meilleur des cas, il possède toujours des pertes qui sont de l'ordre de 0,05 à 0,2 dB/cm.

Il existe toujours, parallèlement à ce mode guidé, d'autres possibilités à la lumière de se propager dans une structure optique intégrée ; ce sont les modes de substrat dont les pertes théoriques ne sont plus nulles ; ils subissent alors seulement des réflexions partielles dans le guide d'onde et de ce fait, une partie de l'énergie s'enfuit dans le substrat et est donc perdue.

Ces modes de substrat existent toujours en théorie et suivant les structures microguides considérées, leurs pertes théoriques peuvent varier entre une fraction de dB/cm à plusieurs dizaines de dB/cm. Cela signifie que sur de courtes distances (100µm à quelques millimètres), leur atténuation reste faible. Ils engendrent donc de la lumière parasite qui peut, dans certaines applications, être extrêmement gênante.

Il peut également arriver que, pour certaines structures microguides dans lesquelles la forme et les dimensions du microguide sont fixées par gravure de la couche supérieure (structures connues sous le nom de "rib waveguide" ou "rib channel guide" en terminologie anglo-saxonne), la lumière puisse être également guidée, en dehors du microguide, en régime planaire. C'est le cas des structures Si/SiO₂ /Si₃ N₄/SiO₂ développées dans le laboratoire d'électronique du demandeur.

Dans ces structures, la lumière reste confinée dans la région de fort indice effectif (c'est-à-dire sous la couche supérieure gravée), mais elle peut aussi être guidée dans les régions adjacentes et en particulier lorsque l'injection de lumière dans le microguide n'est pas parfaite.

Ceci nous amène au second point problématique.

En effet, il n'est en pratique pas possible d'injecter la lumière dans une structure guide d'onde monomode et de n'exciter que le mode guidé dans cette structure.

Pour cela, il faudrait injecter une répartition d'amplitude lumineuse (grâce à une fibre optique monomode ou à une diode laser par exemple) absolument identique à celle du mode guidé de la structure et strictement superposée à celle-ci. Or, ceci est impossible à réaliser techniquement.

De plus, certains composants optiques intégrés engendrent eux-mêmes de la lumière parasite par leurs défauts intrinsèques (rugosités, défauts ponctuels, etc.). Aussi, même si l'injection de lumière dans le microguide était parfaite, ce second problème subsisterait. Ceci conduit en particulier aux inconvénients suivants :
a) - augmentation du taux de lumière parasite,
b) - instabilité du signal optique car cette lumière parasite peut interférer avec la lumière guidée. Du fait des indices effectifs différents mis en jeu, les perturbations extérieures n'agissent pas de façon identique sur la phase du mode guidé et sur celle de la lumière parasite provoquant des fluctuations permanentes.

Ce problème est essentiellement identifié sur des dispositifs assez complexes et sensibles à la lumière parasite, comme les dispositifs interférométriques (capteur de déplacement, gyromètre optique intégré).

L'invention a justement pour objet un filtre optique spatial monomode pour optique intégrée et son procédé de fabrication permettant de remédier aux différents inconvénients mentionnés ci-dessus. En particulier, ce filtre permet d'éviter la propagation de toute lumière parasite dans une structure guide optique intégrée monomode.

On connaît par GB-A-2 209 844, un guide d'onde optique intégré ayant une courbure dans un plan principal.

De façon plus précise, l'invention a pour objet un filtre optique conformément à la revendication 1.

La forme du microguide permet inévitablement d'éliminer toute lumière parasite. En effet, seule la lumière parasite engendrée au voisinage immédiat du microguide est gênante. En outre, toute lumière parasite engendrée, soit dans le substrat, soit en mode guidé planaire de part et d'autre du microguide son entrée, ne peut que se propager en ligne droite.

Aussi, même si le microguide n'est pas strictement monomode (par exemple à cause d'incertitudes technologiques), la partie courbe du microguide assure une sélectivité très forte du fait que les pertes dans cette partie courbe sont très différentes entre les modes guidés, le premier mode étant toujours celui qui présente le moins de perte.

Les rayons de courbure et les longueurs des différentes sections droites du microguide sont, avantageusement, calculés pour avoir un écartement minimum D entre l'entrée et la sortie du microguide, mesure dans le plan parallèle à la surface du substrat.

Différentes formes pour le microguide peuvent être envisagées. Cependant, les dispositifs réalisés en optique intégrée présentent généralement un axe optique de direction imposée afin de répondre à des problèmes de forme, de compacité et de disposition des composants.

Aussi, le microguide du filtre selon l'invention présente, dans le plan parallèle à la surface du substrat, plutôt une forme en "S". Dans la suite du texte, ce qui est dit pour un microguide en forme de "S" reste bien entendu valable pour un microguide présentant une seule courbe dont la seule limite est de présenter un rayon de courbure répondant aux définitions données ci-dessus.

Afin d'assurer une bonne absorption de la lumière parasite par les absorbeurs, ces derniers s'étendent avantageusement tout le long de la partie courbe et par conséquent du "S".

Par ailleurs, afin d'éviter toute réflexion de lumière parasite à l'interface des absorbeurs, qui pourraît être alors reinjectée dans le microguide, la surface de chaque absorbeur, en regard du microguide, est dentelée ou crénelée.

En effet, il faut souligner qu'un absorbeur modifie la partie réelle de l'indice de réfraction du mode guide et conduit donc à une discontinuité d'indice et par conséquent à des réflexions parasites potentielles. La forme dentelée ou crénelée de ces absorbeurs évite que ces réflexions puissent engendrer de la lumière parasite dans la direction de propagation de la lumière guidée, c'est-à-dire dans la direction du microguide.

De plus, les absorbeurs doivent présenter une forme géométrique permettant d'éviter tout piégeage parasite de lumière et en particulier une forme géométrique dissymétrique par rapport à l'axe de propagation de la lumière (c'est-à-dire l'axe optique du filtre). Les dents ou créneaux des absorbeurs sont en outre espaces de façon irrégulière,

L'utilisation d'un microguide en "S" et d'un écartement D minimum entre son entrée et sa sortie résulte en outre du fait que les absorbeurs ne peuvent être placés à proximité immédiate du microguide car ils absorberaient aussi la lumière guidée que l'on souhaite voir se propager. Aussi, il y a une distance d minimum à respecter entre les absorbeurs et les bords du microguide et en particulier, dans le cas d'absorbeurs dentelés, entre l'extrémité des dents de scie et les bords du microguide.

Cette distance minimum dépend de la structure guide utilisée et de la profondeur des dents des absorbeurs. Elle doit être la plus petite possible tout en évitant l'absorption du mode que l'on souhaite voir se propager. En pratique, cette distance minimum, mesurée dans un plan parallèle à la surface du substrat, est de 3 à 10µm.

Si b est la largeur du microguide, on peut, en première approximation, dire que D>2d+b. En pratique, on prend une marge de sécurité suffisante pour que cette inégalité soit toujours vérifiée.

Toutefois, les rayons de courbure étant imposés pour un filtrage efficace, il est souhaitable que D ne soit pas trop grand car ceci pénalise l'encombrement général du dispositif optique intégré équipé de tels filtres.

En pratique, on choisit D allant de 20 à 50µm.

Les rayons de courbure du "S" dépendent, comme on l'a dit précédemment, des structures guides et principalement de la différence d'indice latéral (réel pour les microguides vrais ou effectif pour les "rib waveguides").

A titre d'exemple, pour une différence d'indice de 5.10⁻³, le rayon de courbure minimum du "S" est de 5 à 15mm et pour une différence d'indice de 5.10⁻², le rayon de courbure minimum est de 0,2 à 2mm suivant les formes mises en jeu. Ainsi, le rayon de courbure diminue lorsque la différence d'indice croît.

La nature des absorbeurs dépend essentiellement de la différence d'indice mise en jeu dans la structure et de la longueur d'onde de travail.

Lorsque cette différence d'indice est forte, c'est-à-dire supérieure à 0,1 et typiquement allant de 0,1 à 0,5, les absorbeurs peuvent être réalisés en métal et en particulier en aluminium, en titane, en argent, en un alliage de chrome et d'or, etc. et leur épaisseur peut être quelconque, par exemple de 10 à 500nm.

Si la différence d'indice mise en jeu dans la structure est faible, c'est-à-dire inférieure à 0,02 et typiquement 5.10⁻³ à 2.10⁻², deux modes de réalisation peuvent être envisages pour les absorbeurs.

Selon un premier mode de réalisation, ces absorbeurs peuvent être en un métal tel que celui cité précédemment, présentant une épaisseur, mesurée selon une direction perpendiculaire à la surface du substrat, faible, c'est-à-dire inférieure à la profondeur de pénétration de la lumière parasite dans le métal utilise. En général, cette épaisseur est choisie inférieure à 20nm et par exemple de 5 à 15nm.

Ce métal de faible épaisseur permet une absorption beaucoup plus forte que précédemment, du fait que les réflexions multiples à l'intérieur du métal deviennent possibles ; l'épaisseur optimale de métal dépend en particulier du coefficient d'absorption de ce dernier.

A titre d'exemple, pour des absorbeurs en aluminium, cette épaisseur optimale est de 5nm.

Avantageusement, cette couche de métal de faible épaisseur peut être recouverte d'un diélectrique quelconque. Comme diélectrique utilisable en association avec une couche métallique pour la constitution des absorbeurs, on peut citer la silice, des colles ou polymères optiques tels que le PMMA (polyméthacrylate de méthyle).

Selon un second mode de réalisation des absorbeurs pour une structure à faible différence d'indice, on utilise un matériau diélectrique ou semiconducteur absorbant dont l'indice de réfraction réel n est voisin de l'indice de réfraction réel n′ de la couche supérieure et dont l'indice de réfraction imaginaire n˝ satisfait à l'équation n"² ≤(n-n')².

Ceci permet de minimiser la réflexion de la lumière à l'interface guide-absorbeur et de favoriser leur fuite vers le milieu absorbant.

Les structures guidantes utilisées pour la réalisation du filtre spatial peuvent être de nature quelconque. En particulier, ces dernières seront choisies en fonction de la structure guidante des composants optiques associés au filtre dans les dispositifs optiques intégrés complexes.

En particulier, la structure guidante peut être réalisée dans du verre, dans du niobate de lithium, dans des structures multicouches semi-conductricestelles que des structures III-V ou II-VI. Par exemple, on peut utiliser l'une des structures suivantes :
- Verre/Verre dopé par échange d'ions/SiO₂
- Si/SiO₂/Si₃N₄/SiO₂
- Si/SiO₂/SiOₓN_{y}/SiO₂ avec 0<x<2 et 0<y<4/3.
- Si/SiO₂/SiO₂ dopé/SiO₂, les dopants de la couche guide étant tels que celle-ci a un indice de réfraction supérieur à celui des couches adjacentes, comme par exemple le phosphore, le germanium, le titane ou l'azote.

Il est en outre possible de remplacer la couche guide en Si₃N₄ par de l'alumine et/ou de doper la silice utilisée comme couche tampon et comme couche supérieure de la structure guidante par un dopant diminuant l'indice de réfraction de la silice tel que le fluor et le bore ou par un dopant augmentant l'indice de réfraction de la silice. Bien entendu, la couche guide doit toujours présenter un indice de réfraction supérieur à celui des couches tampon et supérieure.

Comme diélectrique absorbant destiné à constituer seul les absorbeurs, utilisable dans l'invention, on peut citer des polymères tels que des résines photosensibles ou des polymères (PMMA par exemple) dopés par des colorants. Pour une longueur d'onde de travail de 800nm environ, on utilise comme colorant du Styryl-9 ou Styryl-8, commercialisé par la société Lambda Physik. Pour une longueur d'onde de travail dans le rouge, on peut utiliser comme colorant des rhodamynes telles que la rhodamyne B ou 6-G, commercialisées par Lambda Physik.

Ce matériau diélectrique absorbant peut par ailleurs être remplacé par un semi-conducteur absorbant tel que Si, CdTe, GaAs, suivant les longueurs d'onde d'utilisation. Toutefois, ces semi-conducteurs ne répondent pas précisément à l'égalité d'indice réel préconisé précédemment dans le cas d'une couche supérieure en silice.

Dans les structures guidantes citées précédemment, le microguide peut être défini par gravure de la couche supérieure ou de la couche guide. Lorsque la couche supérieure de la structure guide est gravée pour fixer la forme du microguide, il est préférable de protéger le filtre optique par un diélectrique dont l'indice de réfraction est au plus égal à celui de la couche supérieure.

Toutefois, l'invention s'applique aussi à un filtre optique dont le microguide n'est pas protégé. Dans ces conditions, les absorbeurs sont constitués d'une couche absorbante gravée selon les motifs voulus, supportée directement par la couche guide et disposés de part et d'autre de la couche supérieure gravée.

Lorsque la protection du microguide est totale, les absorbeurs peuvent consister en une couche absorbante recouvrant entièrement le microguide.

Il est en outre possible de prévoir un diélectrique de protection constituant l'ultime couche du filtre optique assurant la protection du microguide et des absorbeurs.

L'invention a aussi pour objet un procédé de fabrication d'un filtre optique monomode, tel que défini précédemment. Ce procédé est conforme à la revendication 16.

Selon un premier mode de mise en oeuvre, le procédé de l'invention comprend les étapes suivantes :
a) - dépôt d'une première couche sur le substrat,
b) - gravure de cette première couche pour former le microguide,
c) - dépôt d'une seconde couche sur la structure obtenue en b, présentant un indice de réfraction au plus égal à celui de la première couche,
d) - gravure de la seconde couche de part et d'autre du microguide pour fixer la forme des absorbeurs,
e) - dépôt d'une couche absorbante sur la structure obtenue en d, et éventuellement,'
f) - gravure de la couche absorbante pour délimiter les absorbeurs.

Selon une première variante de ce premier mode de mise en oeuvre, ce procédé comprend les étapes suivantes :
A) - dépôts successifs d'une couche tampon et d'une couche guide sur le substrat, la couche guide ayant un indice de réfraction supérieur à celui de la couche tampon
B) - gravure de la couche guide pour former le microguide,
C) - dépôt d'une couche supérieure sur la structure obtenue en B, présentant un indice de réfraction inférieur à celui de la couche guide,
D) - gravure de la couche supérieure de part et d'autre du microguide pour fixer la forme des absorbeurs,
E) - dépôt d'une couche absorbante sur la structure obtenue en D, et éventuellement,
F) - gravure de la couche absorbante pour délimiter les absorbeurs.

Cette première variante est utilisée de préférence lorsque la structure guide est une structure à faible variation d'indice.

Selon une seconde variante, ce procédé comprend les étapes suivantes :
a') - dépôts successifs d'une couche tampon, d'une couche guide et d'une couche supérieure sur le substrat, la couche guide ayant un indice de réfraction supérieur à celui des couches tampon et supérieure,
b') - gravure de la couche supérieure pour former le microguide,
c') - dépôt d'une couche de protection sur la structure obtenue en b présentant un indice de réfraction au plus égal à celui de la couche supérieure,
d') - gravure de la couche de protection de part et d'autre du microguide pour fixer la forme des absorbeurs,
e') - dépôt d'une couche absorbante sur la structure obtenue en d′ et éventuellement,
f') - gravure de la couche absorbante pour délimiter les absorbeurs.

Cette seconde variante est avantageusement utilisée pour une structure à forte variation d'indice.

Selon un second mode de mise en oeuvre, le procédé de l'invention comprend les étapes suivantes :
A') - dépôts successifs d'une couche tampon, d'une couche guide et d'une couche supérieure sur le substrat, la couche guide ayant un indice de réfraction supérieur à celui des couches tampon et supérieure,
B') - gravure de la couche supérieure pour former le microguide,
C') - dépôt d'une couche absorbante sur la structure obtenue en B′,
D') - gravure de la couche absorbante pour fixer la forme des absorbeurs, et
E') - dépôt éventuel d'une couche de protection sur la structure obtenue en D′ présentant un indice de réfraction au plus égal à celui de la couche supérieure.

Ce second mode de mise en oeuvre est utilisable plus particulièrement dans le cas d'une structure à forte variation d'indice.

D'autres caractéristiques et avantages de l'invention ressortiront mieux de la description qui va suivre, donnée à titre illustratif et non limitatif, en référence aux dessins annexes dans lesquels :
- la figure 1 représente schématiquement, en vue de dessus, un filtre optique spatial conforme à l'invention,
- la figure 2 représente schématiquement, en coupe selon la ligne 11 de la figure 1 une première variante de réalisation du filtre optique conforme à l'invention,
- la figure 3 représente schématiquement, en vue de dessus, un mode préféré de réalisation du filtre spatial conforme à l'invention,
- la figure 4 représente schématiquement, en coupe, les étapes de fabrication d'un filtre optique, selon un premier procédé conforme à l'invention,
- la figure 5 est une variante de mise en oeuvre du procédé de l'invention,
- la figure 6 illustre les différentes étapes de fabrication du filtre optique selon un second mode de mise en oeuvre,
- la figure 7 représente, en coupe, une variante de fabrication d'un filtre optique conforme à l'invention,
- la figure 8 représente, en coupe, une variante de fabrication du filtre de l'invention, et
- la figure 9 représente les étapes de fabrication d'un filtre optique, selon une variante de mise en oeuvre.

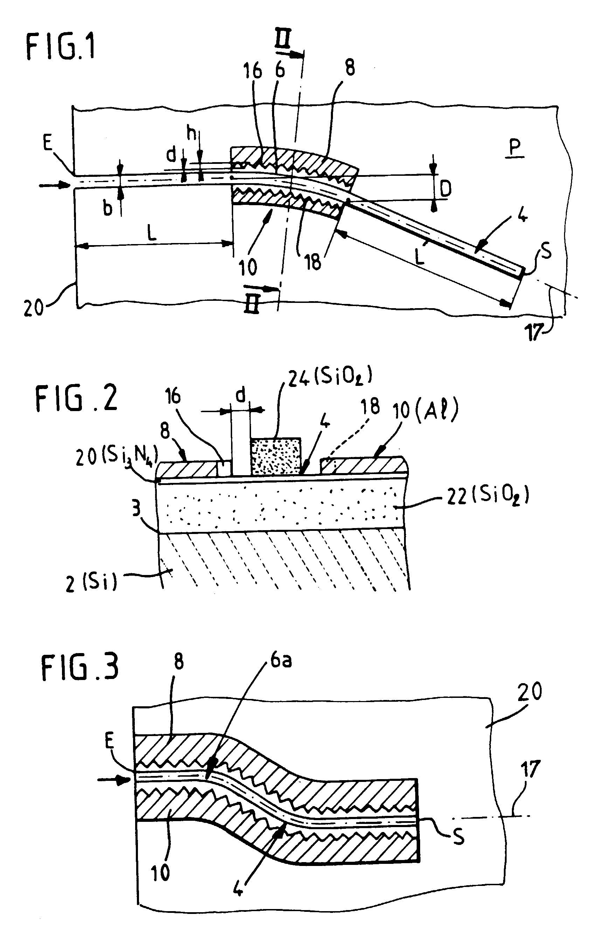

Le filtre optique spatial monomode intégré, conforme à l'invention, représenté sur les figures 1 et 2 comporte sur un substrat 2 un microguide optique 4 présentant dans le plan P parallèle à la surface 3 du substrat, une partie courbe 6 le long de laquelle s'étendent deux absorbeurs 8 et 10. Ces absorbeurs sont disposés de part et d'autre du microguide dans le plan P, et leur côté, en regard du microguide, comporte des dents respectivement 16 et 18. Les dents 16 et 18 sont espacées irrégulièrement et/ou décalées les unes par rapport aux autres de façon qu'il n'y ait pas de symétrie géométrique par rapport à l'axe optique 17 du filtre.

L'écart latéral D, mesuré dans le plan P, entre l'entrée E et la sortie S du microguide, est choisi de 20 à 50µm. De plus, la profondeur h des dents de chaque absorbeur est choisie de 5 à 20µm suivant le confinement latéral des modes guides considérés. Enfin, la distance d minimum séparant chaque absorbeur des bords du microguide, représentant la distance séparant l'extrémité des dents des bords du microguide, est de 3 à 10µm.

Dans sa réalisation la plus simple, tel que représenté sur la figure 2, le microguide 4 consiste en une couche guide 20 interposée entre une couche tampon 22 et une couche supérieure 24, appelée généralement superstrat, la couche tampon 22 étant placée entre la couche guide 20 et le substrat 2. La couche tampon 22 et le superstrat 24 présentent des indices de réfraction inférieurs à celui de la couche guide 20.

La réalisation représentée sur la figure 2 est essentiellement destinée à une structure guide à forte variation d'indice, c'est-à-dire à une variation d'indice supérieure à 0,1 entre la couche guide et les couches supérieure et tampon.

Dans la suite du texte, les indices de réfraction seront donnés pour une longueur d'onde de travail de 800nm.

Par exemple, le substrat 2 est du silicium monocristallin ; la couche tampon 22 de l'oxyde de silicium non intentionnellement dopé de 1 à 12µm d'épaisseur, obtenue par oxydation thermique haute pression du substrat ou par dépôt chimique en phase vapeur assisté par un plasma (PECVD) ; la couche guide 20 est une couche de nitrure de silicium de 100 à 400nm d'épaisseur, obtenue par dépôt chimique en phase vapeur basse pression (LPCVD) ou assisté par un plasma (PECVD) ; le superstrat 24 est une couche d'oxyde de silicium non intentionnellement dopé de 1 à 6µm déposée par PECVD. La silice non intentionnellement dopée a un indice réel de 1,45 et le nitrure de silicium un indice voisin de 2.

Il est possible de remplacer la couche guide en nitrure de silicium par de l'oxynitrure de silicium de formule SiOₓN_{y} avec 0<x<2 et 0<y<4/3 dont l'indice de réfraction est compris entre 1,46 et 2 selon la composition en x et en y. On peut aussi utiliser pour la couche guide de l'alumine dont l'indice de réfraction réel est de 1,65 ou en un matériau organique tel que le PMMA et les polyimides dont les indices de réfraction sont compris entre 1,45 et 1,7).

Dans la réalisation de la figure 2, la forme du microguide est fixée par une gravure, selon le motif voulu, du superstrat 24. Cette gravure est effectuée sur toute l'épaisseur de la couche supérieure 24.

Elle est effectuée par une gravure ionique réactive avec un plasma de CHF₃ pour de la silice pure.

Les absorbeurs 8 et 10 consistent en une couche de métal et notamment d'aluminium de 100nm d'épaisseur environ, déposée sur l'ensemble de la structure par pulvérisation cathodique. La forme des absorbeurs est obtenue par gravure sèche de la couche absorbante, selon le motif voulu ; cette gravure est du type ionique réactif avec un plasma de CCl₄ (gaz chloré de façon générale) pour l'aluminium. On peut également utiliser une gravure humide en utilisant une solution d'H₃PO₄ pour de l'aluminium.

Le rayon de courbure de la partie courbe 6 du microguide 4 ainsi que les longueurs L et L′ des parties droites du microguide sont choisis afin que les pertes du premier mode guidé soient minimum et que les pertes des autres modes soient maximum.

En pratique, le microguide 4 présentera une forme en "S" comme représenté en vue de dessus sur la figure 3. Sur cette figure, le "S" porte la référence 6a et les absorbeurs 8 et 10 épousent la forme du "S".

Toute lumière parasite engendrée soit dans le substrat 2, soit en mode guidé planaire de part et d'autre du microguide, notamment dans l'intervalle d (figure 2) séparant le microguide des absorbeurs, à l'entrée E du microguide, ne peut que se propager en ligne droite. De par la forme en "S" du microguide, elle est inévitablement éliminée par les absorbeurs.

Dans le mode de réalisation représente sur la figure 2, le microguide et par conséquent le filtre optique ne sont pas protégés de l'environnement. Afin d'améliorer l'efficacité du filtre, on utilise généralement un microguide protégé par un diélectrique.

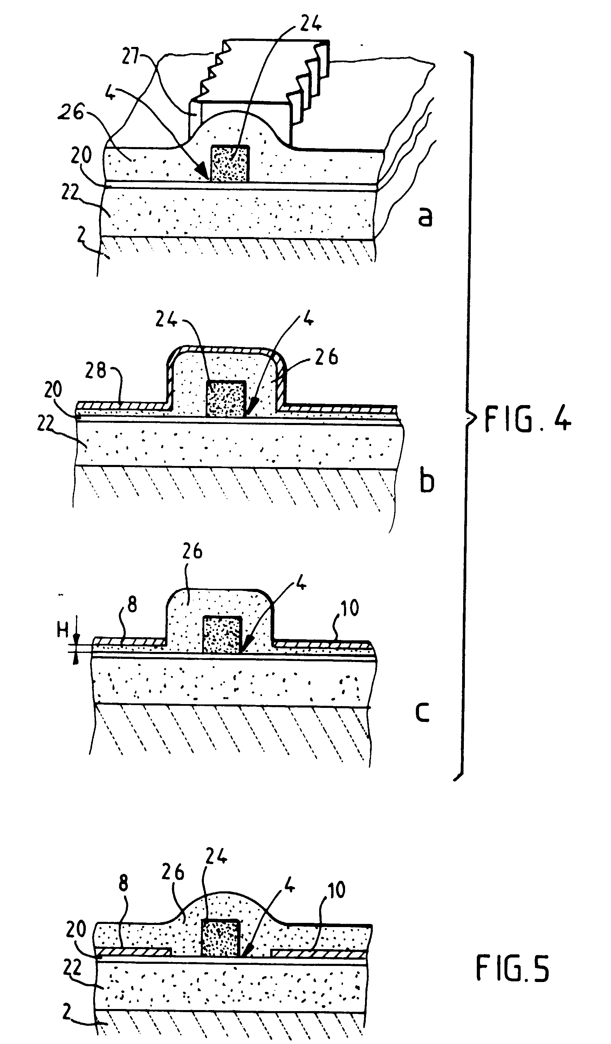

Sur la figure 4, on a représenté schématiquement un premier procédé de fabrication d'un filtre optique à microguide protégé. Cette fabrication est relative à un microguide à forte variation d'indice. Les matériaux utilises sont ceux décrits à la figure 2.

Après depôts successifs des couches tampon 22, guide 20 et supérieure 24 par les techniques citées précédemment, on effectue une gravure anisotrope de la couche supérieure 24 selon la forme en "S" désirée selon les procédés classiques de photolithogravure.

Ensuite, on dépose un diélectrique 26 sur l'ensemble de la structure, comme représenté sur la partie a de la figure 4. Le diélectrique 26 doit présenter un indice de réfraction réel au plus égal à celui de la couche supérieure 24. Par exemple, le diélectrique peut être en silice non intentionnellement dopée ou dopée avec du fluor diminuant ainsi l'indice de réfraction de la silice. Le dopage est assuré par 10²¹ à 10²² atomes de dopant par cm³.

L'épaisseur de la couche 26 doit être supérieure à celle de la couche 24 et par exemple égale à 1 à 10µm.

Cette couche de diélectrique 26 est obtenue par LPCVD ou PECVD.

L'étape suivante du procédé consiste à graver la couche de protection 26 de part et d'autre du microguide 4 suivant la forme dentelée voulue pour les absorbeurs. A cet effet, on forme un masque de résine 27 par photolithographie sur la couche 26, masquant la zone de la couche 26 à conserver. Ce masque comporte sur les flancs des dents que l'on transfère par gravure anisotrope dans la couche 26.

Cette gravure est une gravure ionique réactive utilisant des gaz fluorés tels CHF₃ comme agent d'attaque.

Après élimination du masque 27, la structure obtenue est celle de la figure 4-b. On dépose alors de façon isotrope une couche absorbante 28 en métal de 100nm d'épaisseur sur l'ensemble de la structure, destinée à la formation des absorbeurs. Le dépôt isotrope permet à cette couche 28 d'épouser la forme dentelée de la couche 26 gravée et de former ainsi les dents des absorbeurs.

La gravure de la couche de protection 26, de part et d'autre du microguide 4 permet, à la lumière guidée parasite de "voir les absorbeurs" et est donc indispensable.

La gravure de la couche de protection peut être partielle, c'est-a-dire qu'il reste une épaisseur H de diélectrique au-dessus de la couche guide 20, comme représenté sur la partie b de la figure 4 ou bien être totale, ce qui correspond à H=0. En pratique, H est choisi inférieur à la distance de pénétration de l'onde évanescente du mode guidé dans la couche 26. En particulier, pour une longueur d'onde de 800nm guidée, H doit être inférieur à 100nm pour une couche guide 20 en Si₃N₄ de 150nm d'épaisseur et une couche 26 en SiO₂.

Si la protection du microguide 4 est totale, c'est-à-dire si la lumière guidée est parfaitement isolée de l'extérieur, ce qui correspond à une épaisseur suffisante de la couche 26 au-dessus du microguide 24, la couche absorbante 28 peut ne pas être gravée pour former deux absorbeurs distincts. Dans ce cas, la structure du filtre optique est celle de la figure 4-b.

Dans le cas contraire, on effectue une gravure anisotrope de la couche absorbante 28 afin de ne garder du matériau absorbant qu'aux pieds du diélectrique 26, comme cela est représenté sur la figure 4-c et former ainsi deux absorbeurs distincts 8 et 10.

Un procédé avantageux consiste, comme représenté sur la figure 5, à former les absorbeurs 8 et 10 de part et d'autre du microguide 4, juste après la gravure de la couche 24 supérieure définissant la forme du microguide 4. Après dépôt d'une couche absorbante sur l'ensemble de la structure puis gravure selon les motifs voulus dentelés pour réaliser les absorbeurs 8 et 10, on dépose, sur l'ensemble de la structure, la couche de protection 26.

Ce procédé n'est applicable que si le diélectrique de la couche 26 peut être déposé après le matériau absorbant, ce qui est notamment le cas pour une couche 26 en SiO₂ déposée par PECVD et une couche absorbante en aluminium. De façon générale, ce procédé n'est pas applicable aux diélectriques dont les températures de dépôt sont supérieures à la température de fusion du métal.

Le filtre optique de l'invention, représenté en vue de dessus sur les figures 1 et 3, peut aussi être réalisé dans une structure à faible variation d'indice, c'est-à-dire avec des différences d'indice inférieures à 0,02 entre la couche guide et les couches tampon et supérieure.

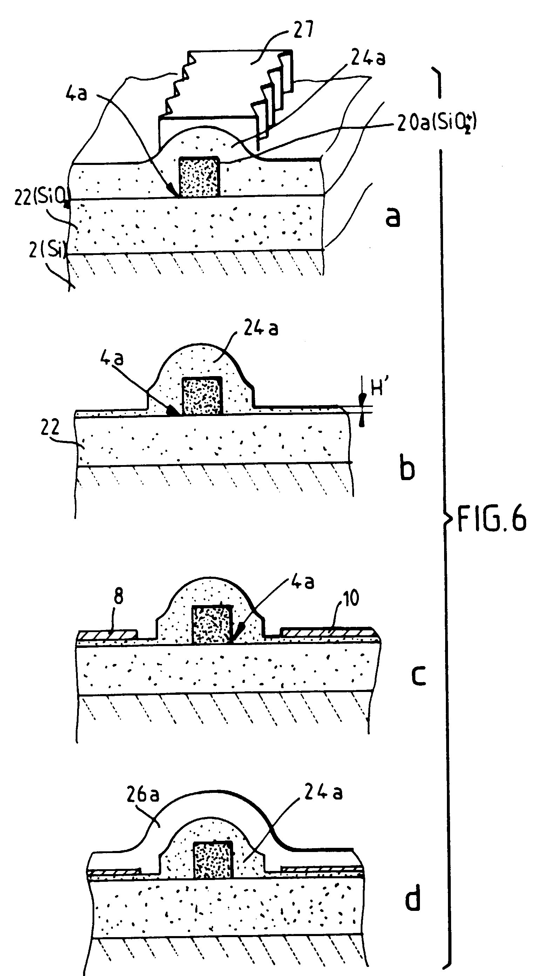

Bien que le procédé décrit en référence aux figures 4 et 5 puisse s'appliquer à des structures à faible variation d'indice, on préfère utiliser les procédés décrits ci-après en référence aux figures 6 à 9.

La fabrication des structures à faible variation d'indice se différencie essentiellement des structures à forte variation d'indice par le fait que la forme et les dimensions du microguide ne sont plus definies par gravure de la couche supérieure ou superstrat, mais par gravure de la couche guide.

La figure 6 représente schématiquement les différentes étapes d'un premier procédé de fabrication d'un filtre optique spatial dans une structure à faible variation d'indice.

Ce procédé, comme représenté sur la partie a, consiste à déposer successivement la couche tampon 22 puis la couche guide sur le substrat 2 et à graver la couche guide pour fixer la forme en "S" et les dimensions du microguide 4a. La couche guide gravée porte la référence 20a. On dépose ensuite la couche supérieure 24a sur l'ensemble de la structure.

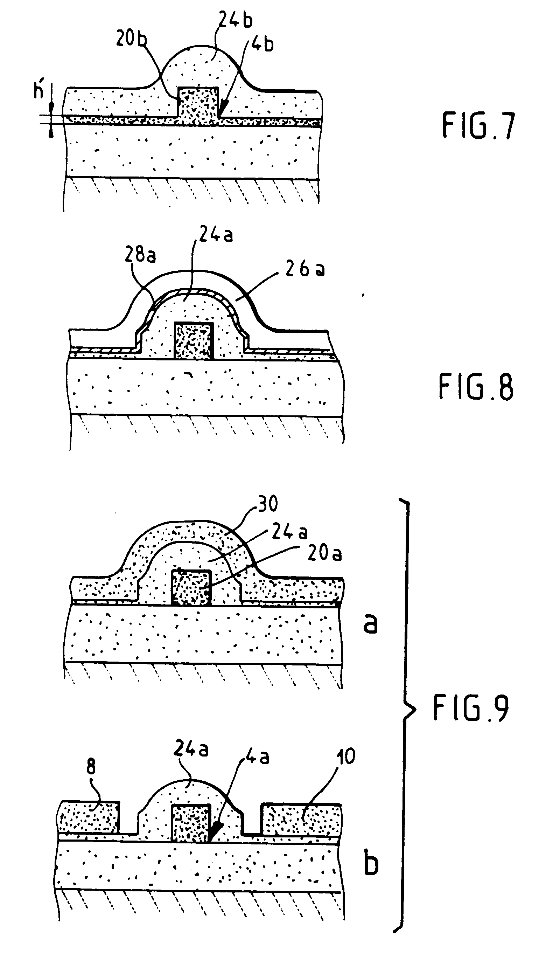

La couche guide peut être gravée sur toute son épaisseur comme représenté sur la figure 6 ou bien que partiellement, comme représenté sur la figure 7. La couche guide gravée de la figure 7 porte la référence 20b et le microguide correspondant la référence 4b. L'épaisseur h' de la couche guide de part et d'autre du microguide 4b doit être inférieure à une valeur h'ₘₐₓ, telle que les pertes de guidage planaires dans des modes parasites soient le plus élevé possible. Par exemple, pour une couche tampon de 8µm d'épaisseur, une couche 20b de 2µm d'épaisseur et une différence d'indice de 10⁻², l'épaisseur h' est choisie inférieure à 500nm.

L'étape suivante du procédé, représentée sur la partie b de la figure 6, consiste à graver le superstrat de part et d'autre du microguide 4a suivant la forme dentelée voulue pour la réalisation des absorbeurs. La couche supérieure gravée porte la référence 24a.

La forme dentelée est obtenue grâce à un masque 27 masquant la zone de la couche 24 surplombant le microguide dont les bords sont dentelés puis à une gravure anisotrope de la couche 24 pour transférer ces dents dans cette dernière.

Comme pour la couche de protection 26 de la figure 4-a, la gravure de la couche supérieure peut être réalisée partiellement ou totalement, la hauteur H' de matériau subsistant sur la couche tampon 22 étant inférieure à la distance de pénétration dans la couche 24a de l'onde évanescente du mode guidé dans le microguide 4a. On élimine ensuite le masque 27.

Comme représenté sur la partie c, on dépose ensuite de façon isotrope une couche absorbante et en particulier de métal de 5 à 15nm épousant la forme dentelée de la couche gravée 24a, que l'on grave pour former les absorbeurs 8 et 10 de part et d'autre, du microguide 14a.

Ensuite, comme représenté sur la partie d, on dépose sur l'ensemble de la structure un diélectrique 26a dont l'indice de réfraction réel est inférieur ou égal à celui du superstrat 24a.

A titre d'exemple, une structure à faible variation d'indice comporte une couche 22 en oxyde de silicium non intentionnellement dopé, d'indice 1,45 de 8 à 12µm d'épaisseur obtenue par oxydation thermique d'un substrat 2 en silicium ou PECVD ; une couche guide 20a gravée en oxyde de silicium dopé au phosphore, au germanium, à l'azote ou au titane de 1 à 10µm, présentant un indice de réfraction réel de 1,46 ; une couche supérieure gravée 24a en oxyde de silicium non intentionnellement dopé de 2 à 10µm.

Les couches de silice pure et dopée sont obtenues par dépôt PECVD ou LPCVD. Les absorbeurs 8 et 10 sont par exemple en aluminium de 5nm d'épaisseur et le diélectrique 26a est en particulier en oxyde de silicium non intentionnellement dopé déposé par LPCVD ou PECVD et ayant une épaisseur de 2 à 15 micromètres.

Si la couche supérieure 24a a une épaisseur suffisante pour que la lumière guidée soit parfaitement isolée de l'extérieur, le métal destiné à l'absorption des lumières parasites peut recouvrir entièrement la structure comme représenté sur la figure 8. Cette couche métallique continue porte la référence 28a. Ceci évite l'étape technologique de gravure de la couche de métal. Ceci est en particulier le cas pour un supersubstrat 24a de 10µm d'épaisseur, pour une longueur d'onde d'utilisation de 800nm et une variation d'indice, entre la couche guide et les couches supérieure et tampon, supérieure à 7.10⁻³.

Dans le mode de réalisation représenté sur la partie d de la figure 6 et sur la figure 8, les absorbeurs sont constitués de la couche métallique gravée ou non recouverte du diélectrique 26a ; ce dernier permet d'amplifier l'absorption de la lumière parasite par le métal.

Un second procédé de fabrication d'un filtre optique sur structure guide à faible variation d'indice conforme à l'invention est représenté sur la figure 9. Ce procédé se distingue de celui représenté sur les figures 6 et 8 par la nature des absorbeurs utilisés.

Aussi, après gravure de la couche de superstrat 24a (partielle ou totale) selon le motif voulu (masque 27) pour fixer la forme des absorbeurs, on dépose sur l'ensemble de la structure une couche épaisse 30 de diélectrique ou de matériau semiconducteur absorbant dont l'indice de réfraction réel n est voisin de l'indice de réfraction réel de la couche supérieure 24a, noté n′, et l'indice de réfraction imaginaire noté n˝ de ce matériau 30 est tel que n˝² ≦(n-n′)² afin de minimiser les réflexions lumineuses à l'interface microguide-absorbeurs et favoriser ainsi leur fuite vers le milieu absorbant.

Pour une couche superstrat 24a en SiO₂ non intentionnellement dopée, le diélectrique 30 est par exemple un polymère absorbant de 10 à 20µm d'épaisseur et en particulier des résines photosensibles dopées avec des colorants absorbant la lumière aux longueurs d'onde d'utilisation.

Si la couche 24a est suffisamment épaisse pour assurer une isolation optique du microguide, la couche de diélectrique 30 n'a pas besoin d'être gravée. Dans le cas contraire, comme représenté sur la partie b de la figure 9, cette couche 30 est gravée pour former des absorbeurs 8 et 10 de part et d'autre du microguide 4a.

La gravure de la couche diélectrique 30 doit être effectuée pour une couche superstrat 24a en silice pure dont l'épaisseur est inférieure à 10µm pour une longueur d'onde de 800nm et une variation d'indice inférieure à 7.10⁻³.

## Revendications

1. Filtre optique spatial monomode intégré destiné à isoler un premier mode optique et à éliminer des seconds modes optiques parasites, consistant en un microguide optique (4, 4a, 4b) supporté par un substrat (2) et présentant, selon un plan parallèle à la surface (3) du substrat (P), au moins une partie courbe (6, 6a) dont le rayon de courbure est tel que les pertes dans la courbe des premier et seconds modes soient respectivement négligeables et très importantes et deux absorbeurs (8, 10, 28, 28a, 30) de lumière qui sont dans une position déterminée par rapport au microguide, ces absorbeurs étant disposés dans un même plan parallèle à la surface du substrat, et de part et d'autre de la partie courbe du microguide, le plan des absorbeurs et la distance entre les absorbeurs et les bords du microguide étant déterminés de sorte que la lumière dans les seconds modes qui s'échappe du microguide dans la partie courbe est absorbée par les absorbeurs, le premier mode optique étant le mode guidé fondamental.

2. Filtre optique selon la revendication 1, caractérisé en ce que les absorbeurs (8, 10, 28, 28a, 30) s'étendent tout le long de la partie courbe (6, 6a).

3. Filtre optique selon la revendication 1 ou 2, caractérisé en ce que le microguide présente dans ledit plan la forme d'un "S" (6a).

4. Filtre optique selon l'une quelconque des revendications 1 à 3, caractérisé en ce que le côté de chaque absorbeur en regard du microguide est dentelé ou crénelé (16, 18).

5. Filtre optique selon l'une quelconque des revendications 1 à 4, caractérisé en ce que les absorbeurs ont des formes dissymétriques par rapport à l'axe optique (17) du filtre.

6. Filtre optique selon l'une quelconque des revendications 1 à 5, caractérisé en ce que l'écart latéral (D) du microguide entre son entrée (E) et sa sortie (S), mesuré dans ce plan, est au moins égal à 20µm.

7. Filtre optique selon l'une quelconque des revendications 1 à 6, caractérisé en ce que la distance minimum (d), mesurée dans ce plan, séparant le microguide de chaque absorbeur est de 3 à 10µm.

8. Filtre optique selon l'une quelconque des revendications 1 à 7, caractérisé en ce que les absorbeurs sont constitués d'un métal absorbant.

9. Filtre optique selon la revendication 8, caractérisé en ce que les absorbeurs présentent une épaisseur, mesurée selon une direction perpendiculaire à ce plan, inférieure à la profondeur de pénétration des seconds modes dans le métal.

10. Filtre optique selon la revendication 9, caractérisé en ce que le métal est recouvert d'un diélectrique (26a).

11. Filtre optique selon l'une quelconque des revendications 1 à 7, caractérisé en ce que les absorbeurs sont constitués d'un matériau diélectrique (30) ou semi-conducteur absorbant dont l'indice de réfraction réel n est voisin de l'indice de réfraction réel n' de la couche supérieure et dont l'indice de réfraction imaginaire n" satisfait à l'équation n"² ≤(n-n')²·

12. Filtre optique selon l'une quelconque des revendications 1 à 11, caractérisé en ce qu'il comprend une couche tampon (22), une couche guide (20, 20a) et une couche supérieure (24, 24a) empilées sur le substrat (2), la couche guide ayant un indice de réfraction supérieur à celui des couches tampon et supérieure, la couche supérieure ou la couche guide étant gravée pour fixer la forme du microguide, et une couche absorbante constituant les absorbeurs.

13. Filtre optique selon la revendication 12, caractérisé en ce que la couche absorbante (28) recouvre entièrement le microguide.

14. Filtre optique selon l'une quelconque des revendications 1 à 13, caractérisé en ce qu'un diélectrique de protection (26, 26a) est prévu sur le microguide et éventuellement sur les absorbeurs.

15. Filtre optique selon l'une quelconque des revendications 12 à 14, caractérisé en ce que le substrat (2) est en silicium, la couche tampon (22) et la couche supérieure (24, 24a) sont en silice non intentionnellement dopée ou dopée avec des dopants diminuant son indice de réfraction et la couche guide (20, 20a) est en un matériau choisi parmi la silice dopée avec un dopant augmentant son indice de réfraction, du nitrure de silicium, de l'alumine et de l'oxynitrure de silicium de formule SiOₓ N_{y} avec 0<x<2 et 0<y<4/3.

16. Procédé de fabrication d'un filtre optique spatial monomode intégré destiné à isoler un premier mode optique et à éliminer des seconds modes optiques parasites, consistant à former un microguide optique (4, 4a, 4b) sur un substrat (2) présentant, selon un plan parallèle (P) à la surface (3) du substrat, au moins une partie courbe (6, 6a) dont le rayon de courbure est tel que les pertes dans la courbe des premier et seconds modes soient respectivement négligeables et très importantes et à former dans un même plan parallèle à la surface du substrat, et de part et d'autre de la partie courbe du microguide, deux absorbeurs de lumière qui sont dans une position déterminée par rapport au microguide, le plan des absorbeurs et la distance entre les absorbeurs et les bords du microguide étant déterminés de sorte que la lumière dans les seconds modes qui s'échappe du microguide dans la partie courbe est absorbée par les absorbeurs, le premier mode optique étant le mode guidé fondamental.

17. Procédé selon la revendication 16, caractérisé en ce qu'il comprend les étapes suivantes :
a) - dépôt d'une première couche (20a, 24) sur le substrat (2),
b) - gravure de cette première couche pour former le microguide (4, 4a, 4b),
c) - dépôt d'une seconde couche (26, 24a) sur la structure obtenue en b, présentant un indice de réfraction au plus égal à celui de la première couche,
d) - gravure de la seconde couche de part et d'autre du microguide pour fixer la forme des absorbeurs,
e) - dépôt d'une couche absorbante (28, 28a, 30) sur la structure obtenue en d, et éventuellement,
f) - gravure de la couche absorbante pour délimiter les absorbeurs.

18. Procédé selon la revendication 16 ou 17, caractérisé en ce qu'il comprend les étapes suivantes:
a') - dépôts successifs d'une couche tampon (22), d'une couche guide (20) et d'une couche supérieure (24) sur le substrat, la couche guide ayant un indice de réfraction supérieur à celui des couches tampon et supérieure,
b') - gravure de la couche supérieure (24) pour former le microguide (4),
c') - dépôt d'une couche de protection (26) sur la structure obtenue en b présentant un indice de réfraction au plus égal à celui de la couche supérieure,
d') - gravure de la couche de protection de part et d'autre du microguide (4) pour fixer la forme des absorbeurs,
e') - dépôt d'une couche absorbante (28) sur la structure obtenue en d' et éventuellement,
f') - gravure de la couche absorbante pour délimiter les absorbeurs.

19. Procédé selon la revendication 16 ou 17, caractérisé en ce qu'il comprend les étapes suivantes :
A) - dépôts successifs d'une couche tampon (22) et d'une couche guide (20a) sur le substrat (2), la couche guide ayant un indice de réfraction supérieur à celui de la couche tampon
B) - gravure de la couche guide pour former le microguide (4a, 4b),
C) - dépôt d'une couche supérieure (24a) sur la structure obtenue en B, présentant un indice de réfraction inférieur à celui de la couche guide,
D) - gravure de la couche supérieure de part et d'autre du microguide (4a, 4b) pour fixer la forme des absorbeurs,
E) - dépôt d'une couche absorbante (28a) sur la structure obtenue en D, et éventuellement,
F) - gravure de la couche absorbante pour délimiter les absorbeurs.

20. Procédé selon la revendication 16, caractérisé en ce qu'il comprend les étapes suivantes :
A') - dépôts successifs d'une couche tampon (22), d'une couche guide (20) et d'une couche supérieure (24) sur le substrat (2), la couche guide ayant un indice de réfraction supérieur à celui des couches tampon et supérieure,
B') - gravure de la couche supérieure pour former le microguide (4),
C') - dépôt d'une couche absorbante (28) sur la structure obtenue en B',
D') - gravure de la couche absorbante pour fixer la forme des absorbeurs, et
E') - dépôt éventuel d'une couche de protection (26) sur la structure obtenue en D' présentant un indice de réfraction au plus égal à celui de la couche supérieure.

21. Procédé selon la revendication 18 ou 20, caractérisé en ce que la couche tampon (22) et la couche supérieure (24) sont en silice non intentionnellement dopée ou dopée avec des dopants diminuant son indice de réfraction et en ce que la couche guide (20) est en alumine, en nitrure de silicium ou en oxynitrure de silicium.

22. Procédé selon la revendication 19, caractérisé en ce que la couche tampon (22) et la couche supérieure (24a) sont en silice non intentionnellement dopée ou dopée avec des dopants diminuant son indice de réfraction et en ce que la couche guide (20a) est en silice dopée avec des dopants augmentant son indice de réfraction.

## Patentansprüche

1. Integriertes optisches Monomode-Raumfilter, bestimmt zum Isolieren bzw. Trennen eines ersten optischen Wellentyps und zum Eliminieren von zweiten optischen Störwellentypen, gebildet durch einen optischen Mikroleiter (4, 4a, 4b), getragen durch ein Substrat (2) und in einer zur Oberfläche (3) des Substrats parallelen Ebene (P) wenigstens einen gekrümmten Teil (6, 6a) aufweisend, dessen Krümmungsradius derart ist, daß die Verluste in der Krümmung beim ersten und zweiten Wellentyp vernachlässigbar beziehungsweise sehr groß sind, und zwei Lichtabsorber (8, 10, 28, 28a, 30), die bezüglich des Mikroleiters in einer bestimmten Position sind, wobei diese Absorber beiderseits des gekrümmten Teils des Mikroleiters in ein und derselben Ebene angeordnet sind, die Ebene der Absorber und der Abstand zwischen den Absorbern und den Rändern des Mikroleiters derart festgelegt sind, daß das Licht bei den zweiten Wellentypen, das dem Mikroleiter in dem gekrümmten Teil entweicht, durch die Absorber absorbiert wird, und daß der erste Wellentyp der fundamentale geleitete Wellentyp ist.

2. Optisches Filter nach Anspruch 1, dadurch gekennzeichnet, daß die Absorber (8, 10, 28, 28a, 30) sich über die gesamte Länge des gekrümmten Teils (6, 6a) erstrecken.

3. Optisches Filter nach Anspruch 1 oder 2, dadurch gekennzeichnet, daß der Mikroleiter in der genannten Ebene die Form eines "S" aufweist (6a).

4. Optisches Filter nach einem der Ansprüche 1 bis 3, dadurch gekennzeichnet, daß die dem Mikroleiter gegenüberstehende Seite jedes Absorbers gezahnt oder gerippt bzw. gezackt ist (16, 18).

5. Optisches Filter nach einem der Ansprüche 1 bis 4, dadurch gekennzeichnet, daß die Absorber bezüglich der optischen Achse (17) des Filters unsymmetrische Formen aufweisen.

6. Optisches Filter nach einem der Ansprüche 1 bis 5, dadurch gekennzeichnet, daß der seitliche Abstand (D) des Mikroleiters zwischen seinem Eingang (E) und seinem Ausgang (S), gemessen in dieser Ebene, wenigstens gleich 20µm ist.

7. Optisches Filter nach einem der Ansprüche 1 bis 6, dadurch gekennzeichnet, daß der in dieser Ebene gemessene minimale Abstand (d), der den Mikroleiter von jedem Absorber trennt, 3 bis 10µm beträgt.

8. Optisches Filter nach einem der Ansprüche 1 bis 7, dadurch gekennzeichnet, daß die Absorber durch ein absorbierendes Metall gebildet werden.

9. Optisches Filter nach Anspruch 8, dadurch gekennzeichnet, daß die Absorber eine Dicke aufweisen, gemessen in einer zu dieser Ebene senkrechten Richtung, die kleiner ist als die Eindringtiefe der zweiten Wellentypen in das Metall.

10. Optisches Filter nach Anspruch 9, dadurch gekennzeichnet, daß das Metall mit einem Dielektrikum (26a) überzogen ist.

11. Optisches Filter nach einem der Ansprüche 1 bis 7, dadurch gekennzeichnet, daß die Absorber gebildet werden durch ein absorbierendes dielektrisches oder halbleitendes Material (30), dessen reelle Brechzahl n der reellen Brechzahlj n' der oberen Schicht ähnlich ist und dessen imaginäre Brechzahl n'' die Gleichung n"²≤(n-n')² befriedigt.

12. Optisches Filter nach einem der Ansprüche 1 bis 11, dadurch gekennzeichnet, daß es eine Pufferschicht (22), eine Leiterschicht (20, 20a) und eine obere Schicht (24, 24a) umfaßt, gestapelt auf dem Substrat (2), wobei die vordere Leiterschicht eine größere Brechzahl als diejenige der oberen und der Pufferschicht hat und die obere Schicht oder die Leiterschicht zur Festlegung der Form des Mikroleiters geätzt werden, und eine die Absorber bildende absorbierende Schicht.

13. Optisches Filter nach Anspruch 12, dadurch gekennzeichnet, daß die absorbierende Schicht (28) den Mikroleiter vollständig überdeckt.

14. Optisches Filter nach einem der Ansprüche 1 bis 13, dadurch gekennzeichnet, daß ein Schutzdielektrikum (26, 26a) auf dem Mikroleiter und eventuell auf dem Absorbern vorgesehen ist.

15. Optisches Filter nach einem der Ansprüche 12 bis 14, dadurch gekennzeichnet, daß das Substrat (2) aus Silicium ist, die Pufferschicht (22) und die obere Schicht (24, 24a) aus Siliciumdioxid sind, nicht-absichtlich dotiert oder dotiert mit Dotierstoffen, die seine Brechzahl verkleinern, und die Leiterschicht (20, 20a) aus einem Material ist, ausgewählt unter dem mit einem seine Brechzahl erhöhenden Dotierstoff dotierten Siliciumdioxid, dem Siliciumnitrid, dem Aluminiumoxid und dem Siliciumoxinitrid der Formel SiOₓN_{y} mit 0<x<2 und 0<y<4/3.

16. Verfahren zur Herstellung eines integrierten optischen Monomode-Raumfilters, bestimmt zum Isolieren bzw. Trennen eines ersten optischen Wellentyps und zum Eliminieren von zweiten optischen Störwellentypen, darin bestehend, einen optischen Mikroleiter (4, 4a, 4b) auf einem Substrat (2) zu bilden, der in einer zur Oberfläche (3) des Substrats parallelen Ebene (P) wenigstens einen gekrümmten Teil (6, 6a) aufweist, dessen Krümmungsradius derart ist, daß die Verluste in der Krümmung beim ersten und zweiten Wellentyp vernachlässigbar beziehungsweise sehr groß sind, und in derselben Ebene, parallel zur Oberfläche des Substrats und beiderseits des gekrümmten Teils des Mikroleiters zwei Lichtabsorber zu bilden, die bezüglich des Mikroleiters in einer bestimmten Position sind, wobei die Ebene der Absorber und der Abstand zwischen den Absorbern und den Rändern des Mikroleiters derart festgelegt sind, daß das Licht bei den zweiten Wellentypen, das dem Mikroleiter in dem gekrümmten Teil entweicht, durch die Absorber absorbiert wird, und daß der erste Wellentyp der fundamentale geleitete Wellentyp ist.

17. Verfahren nach Anspruch 16, dadurch gekennzeichnet, daß es die folgenden Schritte umfaßt:
a) Abscheiden einer ersten Schicht (20a, 24) auf dem Substrat (2),
b) Ätzen dieser ersten Schicht, um den Mikroleiter (4, 4a, 4b) zu bilden,
c) Abscheiden einer zweiten Schicht (26, 24a) auf der in b erhaltenen Struktur, eine Brechzahl höchstens gleich der der ersten Schicht aufweisend,
d) Ätzen der zweiten Schicht beiderseits des Mikroleiters, um die Form der Absorber festzulegen,
e) Abscheiden einer absorbierenden Schicht (28, 28a, 30) auf der in d erhaltenen Struktur und, eventuell,
f) Ätzen der absorbierenden Schicht, um die Absorber zu begrenzen.

18. Verfahren nach Anspruch 16 oder 17, dadurch gekennzeichnet, daß es die folgenden Schritte umfaßt:
a') Aufeinanderfolgende Abscheidungen einer Pufferschicht (22), einer Leiterschicht (20) und einer oberen Schicht (24) auf dem Substrat, wobei die Leiterschicht eine größere Brechzahl aufweist als die Pufferschicht und die obere Schicht,
b') Ätzen der oberen Schicht (24), um den Mikroleiter (4) zu bilden,
c') Abscheiden einer Schutzschicht (26) auf der in b' erhaltenen Struktur, eine Brechzahl höchstens gleich der der oberen Schicht aufweisend,
d') Ätzen der Schutzschicht beiderseits des Mikroleiters (4), um die Form der Absorber festzulegen,
e') Abscheiden einer absorbierenden Schicht (28) auf der in d' erhaltenen Struktur und, eventuell,
f') Ätzen der absorbierenden Schicht, um die Absorber zu begrenzen.

19. Verfahren nach Anspruch 16 oder 17, dadurch gekennzeichnet, daß es die folgenden Schritte umfaßt:
A) Aufeinanderfolgende Abscheidungen einer Pufferschicht (22), einer Leiterschicht (20a) auf dem Substrat (2), wobei die Leiterschicht eine größere Brechzahl aufweist als die Pufferschicht,
B) Ätzen der Leiterschicht, um den Mikroleiter (4a, 4b) zu bilden,
C) Abscheiden einer oberen Schicht (24a) auf der in B erhaltenen Struktur, eine Brechzahl höchstens gleich der der Leiterschicht aufweisend,
D) Ätzen der oberen Schicht beiderseits des Mikroleiters (4a, 4b), um die Form der Absorber festzulegen,
E) Abscheiden einer absorbierenden Schicht (28a) auf der in D erhaltenen Struktur und, eventuell,
F) Ätzen der absorbierenden Schicht, um die Absorber zu begrenzen.

20. Verfahren nach Anspruch 16, dadurch gekennzeichnet, daß es die folgenden Schritte umfaßt:
A') Aufeinanderfolgende Abscheidungen einer Pufferschicht (22), einer Leiterschicht (20) und einer oberen Schicht (24) auf dem Substrat (2), wobei die Leiterschicht eine größere Brechzahl aufweist als die Pufferschicht und die obere Schicht,
B') Ätzen der oberen Schicht, um den Mikroleiter (4) zu bilden,
C') Abscheiden einer absorbierenden Schicht (28) auf der in B' erhaltenen Struktur,
D') Ätzen der absorbierenden Schicht, um die Form der Absorber festzulegen, und
E') eventuelles Abscheiden einer Schutzschicht (26) auf der in D' erhaltenen Struktur, eine Brechzahl höchstens gleich der der oberen Schicht aufweisend.

21. Verfahren nach Anspruch 18 oder 20, dadurch gekennzeichnet, daß die Pufferschicht (22) und die obere Schicht (24) aus Siliciumdioxid sind, nicht-absichtlich dotiert oder dotiert mit Dotierstoffen, die seine Brechzahl verkleinern, und daß die Leiterschicht (20) aus Aluminiumoxid, Siliciumnitrid oder Siliciumoxinitrid ist.

22. Verfahren nach Anspruch 19, dadurch gekennzeichnet, daß die Pufferschicht (22) und die obere Schicht (24a) aus Siliciumdioxid sind, nicht-absichtlich dotiert oder dotiert mit Dotierstoffen, die seine Brechzahl verkleinern, und daß die Leiterschicht (20a) aus Siliciumdioxid ist, dotiert mit Dotierstoffen, die seine Brechzahl vergrößern.

## Claims

1. Integrated monomode spatial optical filter intended to isolate a first optical mode and eliminate second stray modes, consisting of an optical microguide (4, 4a, 4b) borne by a substrate (2) and having, along a plane parallel to the surface (3) of the substrate (P), at least one curved portion (6, 6a) whose radius of curvature is such that the losses in the curve of the first and second modes are respectively negligible and extremely large and two light absorbers (8, 10, 28, 28a, 30) located in a given position with respect to the microguide, said absorbers being located in the same plane parallel to the surface of the substrate and on either side of the curved portion of the microguide, the plane of the absorbers and the distance between the absorbers and the edges of the microguide being determined in such a way that the light in the second modes escaping from the microguide into the curved portion is absorbed by the absorbers, the first optical mode being the fundamental guided mode.

2. Optical filter according to claim 1, characterized in that the absorbers (8, 10, 28, 28a, 30) extend fully along the curved portion (6, 6a).

3. Optical filter according to claim 1 or 2, characterized in that the microguide has the shape of an "S" (6a) in said plane.

4. Optical filter according to any one of the claims 1 to 3, characterized in that the side of each absorber opposite the microguide is toothed or notched (16, 18).

5. Optical filter according to any one of the claims 1 to 4, characterized in that the absorbers have dissymmetrical shapes with respect to the optical axis (17) of the filter.

6. Optical filter according to any one of the claims 1 to 5, characterized in that the lateral distance (D) of the microguide between its input (E) and its output (S) measured inside this plane is at least equal to 200 µm.

7. Optical filter according to any one of the claims 1 to 6, characterized in that the minimum distance (d) measured inside this plane separating the microguide from each absorber is between 3 and 10 µm.

8. Optical filter according to any one of the claims 1 to 7, characterized in that the absorbers are made of an absorbant metal.

9. Optical filter according to claim 8, characterized in that the thickness of the absorbers measured along a direction perpendicular to this plane is less than the depth of the second modes for penetrating into the metal.

10. Optical filter according to claim 9, characterized in that the metal is covered by a nonconductor (26a).

11. Optical filter according to any one of the claims 1 to 7, characterized in that the absorbers are made of an absorbant nonconductive or semiconductive material (30) whose real refraction index n is close to the real refraction index n' of the upper film and whose imaginary refraction index n" satisfies the equation n"2 ≤ (n-n')2.

12. Optical filter according to any one of the claims 1 to 11, characterized in that it includes a buffer film (22), a guide film (20, 20a) and an upper film (24, 24a) stacked on the substrate (2), the guide film having a refraction index larger than that of the buffer and upper films, the upper film and the guide film being etched so as to fix the shape of the microguide, and an absorbant film constituting the absorbers.

13. Optical filter according to claim 12, characterized in that the absorbant film (28) fully covers the microguide.

14. Optical filter according to any one of the claims 1 to 13, characterized in that a protection nonconductor (26, 26a) is disposed on the microguide and possibly on the absorbers.

15. Optical filter according to any one of the claims 12 to 14, characterized in that the substrate (2) is made of silicon, the buffer film (22) and the upper film (24, 24a) are made of silica possibly doped with dopers reducing its refraction index, and the silica guide film (20, 20a) is made of silica doped with a selected doper increasing its refraction index, namely silicon nitride, aluminium or silicon oxinitride with the formula SiOxNy with 0 <x< 2 and 0 <y < 4/3.

16. Method for embodying an integrated monomode spatial optical filter intended to isolate a first optical mode and eliminate second stray optical modes, consisting of forming an optical microguide (4, 4a, 4b) on a substrate (2) and having along a plane (P) parallel to the surface (3) of the substrate at least one curved portion (6, 6a) whose radius of curvature is such that the losses in the curve of the first and second modes are respectively negligible and extremely high, and of forming in the same plane parallel to the surface of the substrate and on either side of the curved portion of the microguide, two light absorbers, which are in a given position with respect to the microguide, the plane of the absorbers and the distance between the absorbers and the edges of the microguide being determined in such a way that the light in the second modes escaping from the microguide into the second portion is absorbed by the absorbers, the first mode being the fundamental guided mode.

17. Method according to claim 16, characterized in that it includes the following stages:
a) depositing a first film (20a, 24) on the substrate (2),
b) etching this first film so as to form the microguide (4, 4a, 4b),
c) depositing a second film (26, 24a) on the structure obtained at b and having a refraction index equal at the most to that of the first film,
d) etching of the second film on both sides of the microguide so as to establish the shape of the absorbers,
e) depositing an absorbant film (28, 28a, 30) on the structure obtained at d, and possibly,
f) etching of the absorbant film so as to delimit the absorbers.

18. Method according to claim 16 or 17, characterized in that it includes the following stages:
a') successive depositings of a buffer film (2), a guide film (20) and an upper film (24) on the substrate, the guide film having a refraction index larger than that of the buffer and upper films,
b') etching of the upper film (24) so as to form the microguide (4),
c') depositing a protection film (26) on the structure obtained at b and having a refractive index equal at the most to that of the upper film,
d') etching of the protection film on both sides of the microguide (4) so as to fix the shape of the absorbers,
e') depositing an absorbant film (28) on the structure obtained at d, and possibly
f') etching of the absorbant film so as to delimit the absorbers.

19. Method according to claim 16 or 17, characterized in that it includes the following stages:
A) successive depositings of a buffer film (22) and a guide film (20a) on the substrate (2), the guide film having a refraction index larger than that of the buffer film,
B) etching of the guide film so as to form the microguide (4a, 4b),
C) depositing of an upper film (24a) on the structure obtained at B and having a refraction index smaller than that of the guide film,
D) etching of the upper film on both sides of the microguide (4a, 4b) so as to fix the shape of the absorbers,
E) depositing an absorbant film (28a) on the structure obtained at D, and possibly
F) etching of the absorbant film so as to delimit the absorbers.

20. Method according to claim 16, characterized in that it includes the following stages:
A') successive depositings of a buffer film (22), a guide film (20) and an upper film (24) on the substrate (2), the guide film having a refraction index larger than that of the buffer and upper films,
B') etching of the upper film so as to form the microguide (4),
C') depositing an absorbant film (28) on the structure obtained at B,
D') etching of the absorbant film so as to fix the shape of the absorbers, and
E') possibly depositing a protection film (26) on the structure obtained at D' and having a refraction index equal at the most to that of the upper film.

21. Method according to claim 18 or 20, characterized in that the buffer film (22) and the upper film (24) are made of silica, possibly doped with dopers reducing its refraction index, and in that the guide film (20) is made of aluminium, silicon nitride or silicon oxynitride.

22. Method according to claim 19, characterized in that the buffer film (22) and the upper film (24a) are made of silica, possibly doped with dopers reducing its refraction index, and in that the guide film (20a) is made of silica doped with dopers increasing its refraction index.
